# EUROPÄISCHE PATENTANMELDUNG

(11) **EP 3 499 274 A1**
(43) Veröffentlichungstag der Anmeldung: **19.06.2019**
(21) Anmeldenummer: 18213433.8
(22) Anmeldetag: 18.12.2018
(51) Int. Cl.: G01V 3/10, G01V 3/08

(54) **ORTUNGSGERÄT-SONDENANORDNUNG**

(30) Priorität: 18.12.2017 DE 202017107694 U; 15.01.2018 DE 202018100200 U
(71) Anmelder: OKM GmbH, 04600 Altenburg (DE)
(72) Erfinder: BECKER, Christian, 04600 Altenburg (DE)
(74) Vertreter: Kruspig, Volkmar

(57) **Zusammenfassung**

Die Erfindung betrifft eine Ortungsgerät-Sondenanordnung, bestehend aus einem langgestreckten, nicht magnetischen Hohlprofil, wobei im Hohlprofil zueinander beabstandete Magnetfeldsensoren, insbesondere Flux-Gate-Sensoren sowie eine Signalverarbeitungs- und Auswerteelektronik angeordnet sind, wobei ein erstes und ein zweites Paar von Magnetfeldsensoren hinsichtlich ihrer Anregungs- und Selektivitätsachse im Wesentlichen senkrecht zueinander ausgerichtet sind, wobei das erste Paar von Sensoren an einem Ende und das zweite Paar von Sensoren am gegenüberliegenden Ende im Hohlprofil angeordnet sind, wobei weiterhin je nach Führungslage des Hohlprofiles entweder senkrecht zur Oberfläche des zu untersuchenden Gebietes oder parallel zur Oberfläche des zu untersuchenden Gebietes jeweils der jeweilige Magnetfeldsensor des ersten und zweiten Paares mit der Signalverarbeitungs- und Auswerteelektronik verschalten ist, derart, dass eine vertikale Gradientenmessung oder eine horizontale Differenz- oder Absolutwertemessung realisierbar ist.

## Beschreibung

Die Erfindung betrifft eine Ortungsgerät-Sondenanordnung, bestehend aus einem langgestreckten, nicht magnetischen Hohlprofil, wobei im Hohlprofil zueinander beabstandete Magnetfeldsensoren, insbesondere Flux-Gate-Sensoren, sowie eine Signalverarbeitungs- und Auswerteelektronik angeordnet sind.

Zurückgehend auf die Firma OKM GmbH, Altenburg, sind verschiedene Anordnungen zum Betreiben von geophysikalischen Ortungsgeräten auf der Basis der Auswertung von Magnetfeldänderungen im Boden vorbekannt, wobei diese Anordnungen signalauswerteseitig auf Flux-Gate-Sensoren zurückgreifen. Das Ausgangssignal dieser Flux-Gate-Sensoren gelangt auf spezielle Verstärkerschaltungen und eine Bewertungs- und Anzeigeeinheit. Bekannte Anzeigeeinheiten sind als TFT- oder LCD-Display, zum Beispiel klappbar mit der Bewertungseinheit in Verbindung stehend, ausgebildet.

Bei einer weiteren technischen Lösung, zurückgehend auf die OKM GmbH, wird zur effektiven Darstellung detektierter Signale des jeweiligen Suchareals eine Videobrille mit entsprechenden Mikro-Displayeinheiten genutzt. Hierdurch können bei einer quasi virtuellen Projektionsfläche, die einer Größe einer Leinwand von etwa 2 Meter x 2 Meter entspricht, auch kleinere Details wahrgenommen werden. Unerwünschte Reflexionen aufgrund von Tageslicht- oder Sonneneinstrahlung sind ausgeschlossen.

Aus der DE 10 2013 010 962 A1 ist eine Ortungsgerät-Sondenanordnung, bestehend aus mehreren, nicht-magnetischen Hohlprofilabschnitten, insbesondere Rohren, vorbekannt, wobei im Inneren der Rohre bzw. des jeweiligen Hohlprofilabschnittes Sende- und Empfängerspulen angeordnet sind und mehrere Hohlprofilabschnitte mit Sende- und Empfängerspulenabschnitten zu einer räumlichen Sonde gefügt werden können. Bei einer geophysikalischen Ortungsgeräteausbildung nach DE 10 2004 059 199 A1 sind in einer rohrförmigen Sonde zwei beabstandete, in gleiche Richtung orientierte
Flux-Gate-Sensoren befindlich, wobei die Sensoren von der Polarität her gleiche Ausgangsspannungen liefern. Die Position der Flux-Gate-Sensoren im Sondenrohr ist fest vorgegeben, wobei bezogen auf den Abstand und die Lage der Sensoren ein Kompromiss zwischen Auflösung und der Detektionsbreite beim Führen einer entsprechenden Sonde gefunden werden muss.

Bei der Vorrichtung zum Orten von Metallteilen mit einer Sondenanordnung sowie einer Haltevorrichtung, die die Sondenanordnung trägt, offenbart in der EP 0 957 377 A2, sind mindestens zwei Spulen vorhanden. Eine der Spulen dient als Sender und eine weitere Spule als Empfänger. Die derartig vorbekannte Haltevorrichtung steht mit einem Querträger in Verbindung. An dem Querträger sind mit Abstand von dessen Enden Längsträger befindlich, die wiederum Spulen aufnehmen. Bei einer Ausgestaltung nach EP 0 957 377 A2 sind die Spulen am Querträger schwenkbar ausgeführt. Der Querträger selbst kann eine veränderbare Länge besitzen, wobei dies durch Verschieben der ersten und/oder der zweiten Gelenkverbindung realisiert wird. Durch die Anordnung von Sender- und Empfängerspule bezüglich der Haltevorrichtung können verschiedene Suchaufgaben mit ein und derselben Sondenanordnung bewältigt werden, wobei neben der elektromagnetischen Verkoppelung auch der Basisabstand der Suchspulen je nach Suchaufgabe variiert werden kann.

Grundsätzlich ist es jedoch erforderlich, bei einer vertikalen, hochauflösenden Gradientenmessung Sonden zu verwenden, die entsprechend orientiert in ihrem Inneren Sensoren aufweisen, die mit ihrer Selektivitätsachse die gewünschte Gradientenmessung in vertikaler Richtung ermöglichen.

Wenn eine horizontale Messung im Sinne einer Differenz- oder Absolutwertemessung erfolgen soll, wird die diesbezügliche Sonde mit ihrer Längsausdehnung parallel zur Oberfläche des zu untersuchenden Objektes bewegt. In diesem Falle müssen die innerhalb der Sonde vorhandenen Sensoren über eine entsprechende Ausrichtung verfügen.

Bei einer entsprechenden geophysikalischen Erkundung muss also die damit befasste Person ein erstes Ortungsgerät zur vertikalen Gradientenmessung und ein zweites Ortungsgerät zur horizontalen Messung mitführen und diese entsprechenden Geräte je nach Suchaufgabe einsetzen.

Aus dem Vorgenannten ist es Aufgabe der Erfindung, eine weiterentwickelte Ortungsgerät-Sondenanordnung zu schaffen, welche universell einsetzbar ist und die ohne manuelle Eingriffe oder Umbauten vertikale und horizontale Messungen gestattet.

Die Lösung der Aufgabe der Erfindung erfolgt mit einer Ortungsgerät-Sondenanordnung gemäß der Merkmalskombination nach Anspruch 1 oder mit einer alternativen Lösung gemäß der Merkmalskombination nach Anspruch 8, wobei die Unteransprüche mindestens zweckmäßige Ausgestaltungen und Weiterbildungen darstellen.

Die erfindungsgemäße Lösung geht davon aus, in einer Sondenanordnung mehrere Sensoren zu verbauen, wobei je nach Ausrichtung der Sonde nur jeweils diejenigen der Einzelsensoren genutzt werden, welche für eine vertikale Gradientenmessung bzw. eine horizontale Messung relevante Messwerte liefern.

Diesbezüglich ist ein erstes Paar von Magnetfeldsensoren hinsichtlich ihrer Anregungs- und Selektivitätsachse im Wesentlichen senkrecht zueinander innerhalb des Hohlprofils ausgerichtet. Ebenso ist ein zweites Paar von Magnetfeldsensoren hinsichtlich deren Anregungs- und Selektivitätsachse im Wesentlichen senkrecht zueinander ausgerichtet und befindet sich innerhalb des Hohlprofils.

Das erste Paar von Sensoren ist an einem Ende und das zweite Paar von Sensoren am gegenüberliegenden Ende im Hohlprofil befindlich.

Je nach Führungslage des Hohlprofils entweder senkrecht zur Oberfläche des zu untersuchenden Gebietes oder parallel zur Oberfläche des zu untersuchenden Gebietes ist jeweils der jeweilige Magnetfeldsensor des ersten und des zweiten Paares mit der Signalverarbeitungs- und Auswerteelektronik verschalten, derart, dass eine vertikale Gradientenmessung oder eine horizontale Differenz- oder Absolutwertemessung erfolgen kann.

Wenn von einer senkrecht zur Oberfläche definierten Führungslage des Hohlprofils gesprochen wird, dann bezieht sich dies auf die senkrechte Orientierung der Längsachse des Hohlprofils zur Oberfläche des zu untersuchenden Gebietes. Bei der horizontalen Messung wird in diesem Sinne die Längsachse des Hohlprofils parallel zur Oberfläche des zu untersuchenden Areals bewegt.

Ausgestaltend kann im Hohlprofil der Sondenanordnung ein Neigungssensor angeordnet werden, um die momentane Führungslage vertikal oder horizontal zu detektieren.

Auf der Basis dieses geschaffenen Detektionssignals kann dann ein automatisches Umschalten und Auswählen der jeweiligen Einzelsensoren des jeweiligen Paares vorgenommen werden.

Selbstverständlich ist auch hier eine händische Umschaltung und Auswahl der entsprechenden Sensoren möglich.

In Weiterbildung der Erfindung kann das Hohlprofil als Teleskopprofil ausgebildet werden derart, dass der Abstand zwischen dem ersten und dem zweiten Magnetfeldsensorpaar variiert werden kann.

Hierdurch kann eine Anpassung an eine zu untersuchende Breite bezogen auf das Gesamt-Untersuchungsareal und sich hieraus ergebender Abschnitte erfolgen. Auch kann diesbezüglich die vertikale Gradientenmessung hinsichtlich der Bodeneigenschaften und der zu untersuchenden Objekte optimiert werden.

Wiederum ausgestaltend ist innerhalb des Hohlprofils mindestens eine Batterie oder ein Akkumulator aufgenommen, um eine diesbezüglich gespeiste Stromversorgung auszubilden.

An der Außenseite des Hohlprofils kann eine Fläche zum Ansetzen eines Sondenführungsstabes oder eines Führungsgriffes vorgesehen sein.

Gemäß der ersten Ausführungsform der Erfindung, bei der jeweils zwei spezifisch lageangeordnete Sensoren ein jeweiliges Paar bilden, sind diese Sensoren im Hohlprofil eingebettet und lagefixiert.

Alternativ kann das jeweilige Paar von Magnetfeldsensoren aus jeweils einem einzigen Sensor bestehen, wobei über eine bewegliche, insbesondere kardanische Aufhängung innerhalb des Hohlprofils dafür gesorgt ist, dass je nach Führungslage vertikal oder horizontal sich eine vertikale oder horizontale Position des Sensors einstellt.

Bei dieser Ausführungsform der Erfindung kann die Anzahl der Sensoren minimiert werden und dadurch eine Kostensenkung bezogen auf das Gesamtprodukt erreicht werden.

Eine weitere alternative Lösung besteht darin, das erste und das zweite Paar von Magnetfeldsensoren nicht in Form von Einzelsensoren auszubilden, die hinsichtlich ihrer Anregungs- und Selektivitätsachse im Wesentlichen senkrecht zueinander ausgerichtet sind, sondern jeweils einen mehrachsig empfindlichen Sensor einzusetzen, wobei dann je nach Führungslage der jeweilige Sensor mit der Signalverarbeitungs- und Auswerteelektronik verschalten ist, um entweder eine vertikale Gradientenmessung oder eine horizontale Differenz- oder Absolutwertemessung zu realisieren.

In einer Weiterbildung der Erfindung besteht die Möglichkeit, dass innerhalb des Hohlprofils eine Schnittstelle zur drahtlosen Messdatenübertragung ausgebildet ist.

Hierbei kann es sich um eine Bluetooth-kompatible bzw. eine WLAN-Schnittstelle oder aber auch eine Schnittstelle nach NFC-Standard handeln.

Zum Erkennen kleinerer, nicht-ferromagnetischer Metallobjekte besteht ein weiterer erfindungsgemäßer Gedanke darin, an einem Ende der Ortungsgerät-Sondenanordnung eine Suchspule anzuordnen, wobei die Achse der Suchspule mit der Längsachse des langgestreckten, nicht magnetischen Hohlprofils im Wesentlichen zusammenfällt. Nach Aktivieren der zusätzlichen Suchspule mit Hochfrequenzenergie zum Erzeugen eines anregenden Feldes können Feldveränderungen aufgrund kleinerer Objekte erkannt werden. Damit lassen sich auch solche Gegenstände und kleinere Objekte orten, die ansonsten das vorhandene natürliche Erdmagnetfeld kaum beeinflussen. Es besteht also die Möglichkeit mit der zusätzlichen Suchspule kleine Objekte aus Nicht-Eisenmetallen zu detektieren.

Die Erfindung soll nachstehend anhand eines Ausführungsbeispieles sowie von Figuren näher erläutert werden.

Hierbei zeigen:
- Fig. 1: eine Prinzipdarstellung einer Ortungsgerät-Sondenanordnung in einer Position senkrecht bzw. vertikal zu einer stilisiert angedeuteten Oberfläche eines zu untersuchenden Areals; und
- Fig. 2: eine ähnliche Darstellung, jedoch mit einer Ausrichtung der Ortungsgerät-Sondenanordnung parallel zur Oberfläche des zu untersuchenden Areals.

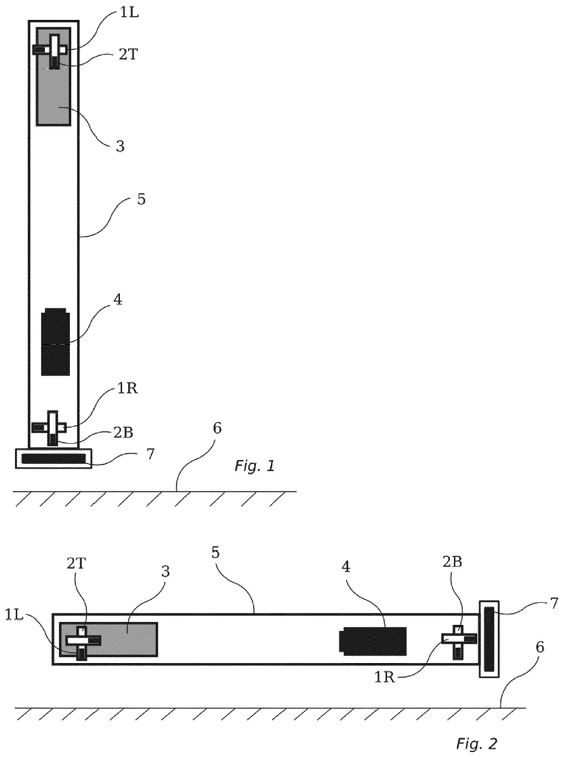

Die Ortungsgerät-Sondenanordnung gemäß Figur 1 und 2 geht aus von einem nicht magnetischen Hohlprofil 5.

Hierbei kann es sich um ein rohrförmiges Hohlprofil aus einem Kunststoffmaterial handeln.

Im Hohlprofil 5 sind zunächst auf einer Hauptplatine 3, die u.a. einen Neigungssensor sowie eine Bluetooth-Schnittstelle aufweist, ein erstes Paar von Magnetfeldsensoren befindlich.

Hierbei handelt es sich um ein erstes Paar, bestehend aus einem linken Sensor für horizontale Messungen 1L sowie einem oberen Sensor für eine vertikale Messung 2T.

Am in Figur 1 unteren Ende der Sondenanordnung bzw. des Hohlprofiles 5 befindet sich ein zweites Paar von Magnetfeldsensoren und ergänzend eine Suchspule 7.

Dieses zweite Paar wird aus einem rechten Sensor für horizontale Messungen 1R sowie einem unteren Sensor für die vertikale Messung 2B gebildet.

Innerhalb des Hohlprofiles 5 ist noch eine Aufnahme für eine Batterie 4 bzw. einen Akkumulator zur Stromversorgung vorgesehen.

In der Darstellung nach Figur 1 erfolgt die Führung der Sondenanordnung senkrecht zur Oberfläche 6 eines zu untersuchenden Areals, das heißt es wird eine vertikale Gradientenmessung ausgeführt.

Mit der Suchspule 7 können auch kleinere, nicht-metallische Objekte unterhalb der Oberfläche 6 geortet werden. Die Längsachse der Suchspule 7 liegt hierbei im Wesentlichen auf oder parallel zur Längsachse des nicht-magnetischen Hohlprofiles 5.

Gemäß der Darstellung nach Figur 2 wird die entsprechende Sondenanordnung im Wesentlichen parallel zur Oberfläche 6 eines zu untersuchenden Gebietes geführt, um eine horizontale Messung im Sinne einer Differenz- oder Absolutwertemessung durchzuführen.

Bei der gezeigten Darstellung der Ausbildung der Sensorpaare 1L/2T bzw. 1R/2B kommen jeweils zwei Einzelsensoren zur Bildung entsprechender Paare zum Einsatz.

Alternativ ist es möglich, jeweils nur einen einzelnen Sensor anzuordnen, der über eine kardanische Aufhängung sich je nach Führungslage, das heißt vertikal oder horizontal, ausrichtet, um dem Messzweck entsprechend eine optimale Position einzunehmen.

Bei den Darstellungen gemäß Figur 1 und 2 wird von einem Hohlprofil 5 fester Länge ausgegangen.

Es besteht jedoch die Möglichkeit, eine Sondenanordnung auszubilden, die aus mehreren, nicht magnetischen Hohlprofilabschnitten besteht, die zu einem Sondengebilde gefügt werden können. Insbesondere sind ausgehend von diesem Basisprofil jeweils beidseitig teleskopartig in das Basisprofil ein- bzw. ausziehbare Teilprofile vorhanden, wobei jeweils mindestens ein Sensor im Endabschnitt des äußersten der ausziehbaren Teilprofile befindlich ist und die Querschnitte der Teilprofile und des Basisprofils eine vom kreisrunden bzw. rotationssymmetrischen abweichenden Querschnitt bzw. eine diesbezüglich abweichende Querschnittsfläche besitzen.

## Patentansprüche

1. Ortungsgerät-Sondenanordnung, bestehend aus einem langgestreckten, nicht magnetischen Hohlprofil, wobei im Hohlprofil (5) zueinander beabstandete Magnetfeldsensoren, insbesondere Flux-Gate-Sensoren sowie eine Signalverarbeitungs- und Auswerteelektronik angeordnet sind,
**dadurch gekennzeichnet**, dassein erstes und ein zweites Paar von Magnetfeldsensoren hinsichtlich ihrer Anregungs- und Selektivitätsachse im Wesentlichen senkrecht zueinander ausgerichtet sind, wobei das erste Paar von Sensoren (1L; 2T) an einem Ende und das zweite Paar von Sensoren (1R; 2B) am gegenüberliegenden Ende im Hohlprofil (5) angeordnet sind, je nach Führungslage des Hohlprofiles (5) entweder senkrecht zur Oberfläche des zu untersuchenden Gebietes (6) oder parallel zur Oberfläche des zu untersuchenden Gebietes (6) jeweils der jeweilige Magnetfeldsensor (2T; 2B/1L; 1R) des ersten und zweiten Paares mit der Signalverarbeitungs- und Auswerteelektronik (3) verschalten ist, derart, dass eine vertikale Gradientenmessung oder eine horizontale Differenz- oder Absolutwertemessung realisierbar ist.

2. Ortungsgerät-Sondenanordnung nach Anspruch 1,
**dadurch gekennzeichnet, dass**
im Hohlprofil (5) ein Neigungssensor angeordnet ist, um die momentane Führungslage vertikal oder horizontal bezogen auf die Oberfläche (6) des zu untersuchenden Gebietes zu detektieren.

3. Ortungsgerät-Sondenanordnung nach Anspruch 2,
**dadurch gekennzeichnet, dass**
auf der Basis der detektierten Führungslage eine automatische Verschaltung der jeweiligen Sensoren (1L; 2T/1R; 2B) des ersten und zweiten Paares hinsichtlich der Signalverarbeitungs- und Auswerteelektronik erfolgt.

4. Ortungsgerät-Sondenanordnung nach einem der vorangegangenen Ansprüche,
**dadurch gekennzeichnet, dass**
das Hohlprofil (5) als Teleskopprofil ausgebildet ist, derart, dass der Abstand zwischen dem ersten und dem zweiten Magnetfeldsensorpaar veränderbar ist.

5. Ortungsgerät-Sondenanordnung nach einem der vorangegangenen Ansprüche,
**dadurch gekennzeichnet, dass**
innerhalb des Hohlprofils eine Batterie oder Akkumulator gespeiste Stromversorgung ausgebildet ist.

6. Ortungsgerät-Sondenanordnung nach einem der vorangegangenen Ansprüche,
**dadurch gekennzeichnet, dass**
an der Außenseite des Hohlprofiles (5) eine Fläche zum Ansetzen eines Sondenführungsstabes oder Führungsgriffes vorgesehen ist.

7. Ortungsgerät-Sondenanordnung nach einem der vorangegangenen Ansprüche,
**dadurch gekennzeichnet, dass**
die das jeweilige Paar bildenden Magnetfeldsensoren (1L; 2T/1R; 2B) im Hohlprofil eingebettet und lagefixiert sind.

8. Ortungsgerät-Sondenanordnung nach einem der Ansprüche 1 bis 6,
**dadurch gekennzeichnet, dass**
das jeweilige Paar von Magnetfeldsensoren aus jeweils einem einzigen Sensor besteht, welcher über eine bewegliche, insbesondere kardanische Aufhängung innerhalb des Hohlprofiles (5) angeordnet ist, derart, dass je nach Führungslage vertikal oder horizontal sich eine vertikale oder horizontale Position des Magnetfeldsensors einstellt.

9. Ortungsgerät-Sondenanordnung nach einem der vorangegangenen Ansprüche,
**dadurch gekennzeichnet, dass**
innerhalb des Hohlprofiles (5) eine Schnittstelle zur drahtlosen Messdatenübertragung ausgebildet ist.

10. Ortungsgerät-Sondenanordnung nach einem der Ansprüche 1 bis 7,
**dadurch gekennzeichnet, dass**
die das jeweilige Paar bildenden Magnetfeldsensoren durch jeweils einen mehrachsig empfindlichen Sensor gebildet werden.
